# EUROPÄISCHE PATENTSCHRIFT

(11) **EP 1 289 785 B1**
(45) Veröffentlichungstag und Bekanntmachung des Hinweises auf die Patenterteilung: **09.07.2008**
(21) Anmeldenummer: 01949222.2
(22) Anmeldetag: 31.05.2001
(51) Int. Cl.: B60H 1/00, B60R 11/02

(54) **HEIZUNGS-, BELÜFTUNGS- UND/ODER KLIMAANLAGE FÜR FAHRZEUGE MIT AUTOTELEFON- FUNKTIONSDETEKTION**
HEATING, VENTILATING AND/OR AIR CONDITIONING SYSTEM FOR VEHICLES PROVIDED WITH VEHICLE TELEPHONE OPERATION DETECTION
AUTOMOBILE EQUIPEE D'UNE INSTALLATION DE CHAUFFAGE, DE VENTILATION ET/OU DE CLIMATISATION POUR VEHICULES A DETECTION DE FONCTIONNEMENT DE TELEPHONE DE VOITURE

(30) Priorität: 02.06.2000 DE 10027558
(43) Veröffentlichungstag der Anmeldung: 12.03.2003
(73) Patentinhaber: ADAM OPEL AG, 65423 Rüsselsheim (DE)
(72) Erfinder: PFLUG, Hans-Peter, 64589 Stockstadt/Rhein (DE); DIEHL, Peter, G., 64521 Gross-Gerau (DE); SCHNEIKER, Peter, 64572 Büttelborn (DE)
(74) Vertreter: Daniel, Ulrich W.P.
(86) Internationale Anmeldenummer: PCT/DE2001/002058
(87) Internationale Veröffentlichungsnummer: WO 2001/092041

(56) Entgegenhaltungen:
- GB-A- 2 344 646
- PATENT ABSTRACTS OF JAPAN vol. 016, no. 549 (M-1338), 18. November 1992 (1992-11-18) & JP 04 208626 A (MAZDA MOTOR CORP), 30. Juli 1992 (1992-07-30)

## Beschreibung

Die Erfindung bezieht sich auf ein Kraftfahrzeug mit einer Heizungs- und Belüftungs- und/oder Klimaanlage, welche einen mit variabler Geschwindigkeit betreibbaren Lüfter umfasst. Derartige Fahrzeuge sind vielfach aus der Praxis bekannt. Bei diesen Fahrzeugen verursacht ein mit hoher Geschwindigkeit betriebener Lüfter eine erhebliche Geräuschbelastung, was störend wirken kann. Ist das Fahrzeug mit einem Autotelefon ausgestattet, stören die Lüftergeräusche insbesondere beim Telefonieren, wobei diese Nachteile durch eine Lösung nach JP-A-04208626 reduziert werden. Hier sind jedoch Sicherheitsrisiken vorhanden, denn der Defrostbetrieb könnte automatisch abgebrochen werden.

Es ist Aufgabe der Erfindung, dieses Problem zu beseitigen, ohne dass dabei Einschränkungen bei der Fahrsicherheit hinzunehmen sind.

Zur Lösung dieser Aufgabe zeichnet sich das erfindungsgemäße Kraftfahrzeug durch die im Patentanspruch 1 angegebenen Merkmale aus. Weitere Einzelheiten ergeben sich aus dem Patentanspruch 2.

Die Lüftergeschwindigkeit ist von einer Steuervorrichtung beeinflussbar, der auch Aktivierungs- und Deaktivierungssignale eines Autotelefons zugeleitet werden (beispielsweise über einen Fahrzeug-BUS). Ist das Autotelefon aktiv, wird die Lüftergeschwindigkeit von der Steuervorrichtung auf einen Maximalwert begrenzt, so dass die Geräuschbelastung vertretbar ist. Sobald das Telefonat beendet ist, wird diese Begrenzung aufgehoben. Der von der Steuervorrichtung einzustellende Maximalwert der Lüftergeschwindigkeit ist abhängig vom Betriebsmodus der Heizungs- und Belüftungs- und/oder Klimaanlage variabel. Dies ist insbesondere sinnvoll, um Verkehrsgefährdungen zu vermeiden. Ist die Anlage auf einen Defrost-Modus eingestellt, entspricht der Maximalwert der maximal einstellbaren Lüftergeschwindigkeit. Somit kann in dem Defrost-Modus also unabhängig vom Telefonieren die notwendige Lüftergeschwindigkeit eingestellt werden. Die Scheiben des Fahrzeugs können mit maximaler Geschwindigkeit von Beschlag befreit werden, ohne dass Sicherheitsrisiken entstehen. In anderen Betriebsarten der Heizungs- und Belüftungs- und/oder Klimaanlage ist der von der Steuervorrichtung vorgegebene Maximalwert der Lüftergeschwindigkeit beim Telefonieren deutlich geringer als die prinzipiell maximal mögliche Lüftergeschwindigkeit. Ist dann also das Gebläse auf einen hohen Wert eingestellt und es geht ein Telefonanruf ein, wird diese Geschwindigkeit automatisch reduziert. Die Geräuschbelastung durch den Lüfter wird selbsttätig geringer und es kann störungsfrei telefoniert werden, ohne dass der Fahrer eine ablenkende Betätigungshandlung ausführen muss. Nach Gesprächsende stellt sich der Lüfter durch ein Signal der Steuervorrichtung wieder auf den ursprünglich eingestellten Wert zurück.

Somit sind mit sehr geringem Aufwand (die Steuervorrichtung kann eine im Fahrzeug vorhandene Steuervorrichtung sein) Komfort und Sicherheit zu erhöhen.

## Patentansprüche

1. Kraftfahrzeug mit einer Heizungs- und Belüftungs- und/oder Klimaanlage, die einen Lüfter, der mit variabler Geschwindigkeit betreibbar ist, umfasst, und mit einer Steuervorrichtung, der Aktivierungs- und Deaktivierungssignale eines Autotelefons zugeleitet werden und die bei aktivem Autotelefon die Lüftergeschwindigkeit zur Geräuschsenkung auf einen Maximalwert begrenzt; **dadurch gekennzeichnet, dass** der Maximalwert in Abhängigkeit von einem aktuellen Betriebsmodus der Heizungs-, Belüftungs- und/oder Klimaanlage variabel ist.

2. Kraftfahrzeug nach Anspruch 1, **dadurch gekennzeichnet, dass** der Maximalwert bei einer eingestellten Defrost-Betriebsart der Heizungs- und Belüftungs- und/oder Klimaanlage der maximal möglichen Lüftergeschwindigkeit bei nicht aktivem Autotelefon entspricht und dass der Maximalwert bei nicht eingestellter Defrost-Betriebsart deutlich geringer als diese maximal mögliche Lüftergeschwindigkeit ist.

## Claims

1. Motor vehicle having a heating and ventilating and/or air-conditioning system, which comprises a fan that is operable at a variable speed, and having a control device, to which activation and deactivation signals of a car phone are supplied and which in the active state of the car phone limits the fan speed to a maximum value for noise reduction, **characterized in that** the maximum value is variable in dependence upon a current mode of operation of the heating, ventilating and/or air-conditioning system.

2. Motor vehicle according to claim 1, **characterized in that** the maximum value, when a defrosting mode of operation of the heating and ventilating and/or air-conditioning system is set, corresponds to the maximum possible fan speed in the non-active state of the car phone and that the maximum value, when the defrosting mode of operation is not set, is markedly lower than this maximum possible fan speed.

## Revendications

1. Véhicule automobile avec une installation de chauffage et de ventilation et/ou de climatisation, ladite installation comprenant un ventilateur, qui est susceptible d'être mis en oeuvre avec une vitesse variable, et avec un dispositif de commande, auquel sont transmis des signaux d'activation et de désactivation d'un téléphone de voiture et qui limite, lorsque le téléphone de voiture est actif, la vitesse du ventilateur à une valeur maximale pour réduire le bruit, **caractérisé en ce que** la valeur maximale est variable en fonction d'un mode de fonctionnement en cours de l'installation de chauffage et de ventilation et/ou de climatisation.

2. Véhicule automobile selon la revendication 1, **caractérisé en ce que** la valeur maximale, lorsqu'un mode de fonctionnement de dégivrage l'installation de chauffage et de ventilation et/ou de climatisation est enclenché, correspond à la vitesse maximale possible du ventilateur lorsque le téléphone de voiture n'est pas actif, et **en ce que** la valeur maximale lorsque le mode de fonctionnement de dégivrage n'est pas enclenché est nettement inférieure à cette vitesse maximale possible du ventilateur.
